# EUROPEAN PATENT APPLICATION

(11) **EP 1 041 521 A2**
(43) Date of publication of application: **04.10.2000**
(21) Application number: 00104707.5
(22) Date of filing: 03.03.2000
(51) Int. Cl.: G07F 7/10

(54) **System and method for electronic commerce**

(30) Priority: 22.03.1999 US 274432
(71) Applicant: eturn.com, Inc., Sunnyvale, CA 94086 (US)
(72) Inventor: Jaekel, Juergen, Atherton, California 94027 (US)
(74) Representative: Liesegang, Eva

(57) **Abstract**

A method for electronic commerce using a computer network includes storing for each of a plurality of buyers a buyer profile comprising criteria for selecting qualified sellers; storing for each of a plurality of sellers a seller profile comprising criteria for selecting requests for quotations on which to quote; receiving from a buyer a request for quotation for a product; applying the buyer profile of the buyer to select a first set of qualified sellers; applying the seller profiles of the first set of qualified sellers to select a second set of qualified sellers to receive requests for quotation; and anonymously transmitting a request for quotation via the network to each of the second set of qualified sellers. A system for electronic commerce using a computer network includes a computer-readable medium comprising a plurality of buyer profiles having criteria for selecting qualified sellers and a plurality of seller profiles having criteria for selecting requests for quotations on which to quote; a first filter, coupled to the computer-readable medium, for applying the buyer profile of the buyer to select a first set of qualified sellers; a second filter, coupled to the first filter and the computer-readable medium, for applying the seller profiles of the first set of qualified sellers to select a second set of qualified sellers to receive a request for quotation; and a communications module, coupled to the second filter, for receiving a request for quotation and for anonymously transmitting the request for quotation via the network to each of the second set of qualified sellers.

## Description

### BACKGROUND OF THE INVENTION

### FIELD OF THE INVENTION

The present invention relates generally to electronic commerce, and more particularly, to a system and method for electronic commerce using standardized product descriptors.

### DESCRIPTION OF THE BACKGROUND ART

Historically, business-to-business sales have high transaction costs which significantly increase the prices of the products sold or purchased. These transaction costs are typically the result of several factors. For example, the salaries of sales representatives drive up the cost of transactions. Even more significant are the charges of "middle men," such as distributors and the like, who are often the primary sales channels for manufacturers. In some cases, several layers of middle men may tack their charges to a product in the stream of commerce before it reaches a consumer, substantially driving up the product's cost.

In addition, significant expenses are associated with one company determining whether another company is a legitimate entity before entering into a business relationship with it. The fear that a potential business partner may be insolvent or unscrupulous requires a careful review of the partner's assets and credit history before entering into a large contract for the sale of goods.

Moreover, significant time and effort is spent in determining the minimum or maximum price for a product that will obtain another company's business. In other words, a sales representative will often try to determine the other company's "pain threshold" in order to set a price that is high enough to maximize profit while also being low enough to obtain the business.

A secondary but related problem is that the selling price does not always reflect the market price, but is often based on factors extraneous to the particular transaction. For example, a seller may demand a higher price from a particular buyer due to that buyer's competitive position in the marketplace. This type of pricing distorts the market, often resulting in higher prices for consumers.

In light of the foregoing, various attempts have been made to reduce the costs of doing business. For example, electronic procurement systems allow a buyer to electronically issue Requests for Quotations (RFQ's), aggregate competitive quotes, and issue Purchase Orders (PO's). These systems are typically implemented using the ANSI X12 Electronic Data Interchange (EDI) standard, and are used by businesses and government entities to engage in large commercial transactions.

Unfortunately, such systems are generally only used where established relationships exist between companies. As a result, many lucrative business opportunities are lost simply because the parties are not aware of each other. Moreover, because the buyer and seller on an EDI-based system know each other, the transaction is ripe for the market manipulations described above. Even more significant is the fact that such systems are plagued by the problem of synchronizing product numbers that are typically different for each buyer and seller.

Another attempt to reduce transaction costs is found in the recent explosion of online auctions on the World Wide Web (WWW). These electronic clearinghouses offer a wide variety of products directly to the consumer with very little overhead. However, while beneficial to individuals wishing to purchase, for example, consumer goods such as a coffee maker or fax machine, such auctions are not well suited for a buyer corporation wishing to purchase parts, components or non-consumer items such as 100,000 units of a particular semiconductor chip.

In general, online auctions are not suited for business-to-business transactions for a variety of reasons. For instance, they are typically little more than "flea markets" that sell used or surplus merchandise to consumers at discounted prices. Buyers are limited to the products offered, and may not requests quotations on desired products. Importantly, except in narrowly defined product categories covered by International Standard Book Numbers (ISBN) or universal product codes (UPC), there are no standard identifiers for finding particular products, only the arbitrary description of the products provided by the auctioneer or seller. Indeed, most online auctions do not even use ISBN or UPC descriptions, since the descriptions are not easily decipherable by humans and because there are countless products that are not covered in either system.

Moreover, online auctions do little to assure a buyer that a seller is a legitimate entity, or vice versa, before entering into an online contract. For example, there is no way for a seller to restrict potential buyers to those who satisfy particular conditions as to credit worthiness or the like. Likewise, there is no way for a buyer to filter quotations from sellers according to conditions like payment or delivery terms. In the business world, such deficiencies are fatal and preclude adoption of online auctions by large businesses and government entities.

In essence, online auctions are conducted with a limited set of rules that essentially protect the auctioneer from liability, but do little to provide the types of assurances and services required in commercial transactions. Additionally, like the EDI procurement system, buyers and sellers in online auctions may know each others' identities from the outset, at least by name, which allows them to demand prices reflecting concerns extraneous to the particular transaction.

Accordingly, what is needed is a system and method for electronic commerce that eliminates the requirement for sales representatives and middle men in business-to-business transactions. What is also needed is a system and method that allows the seller and buyer to establish conditions for the transaction, filtering RFQ's and vendor quotes according to those conditions. What is also needed is a standardized product identifier for each product that allows an unlimited variety of products to be offered in electronic commerce. What is also needed is a system and method that protects the integrity of the market by preventing buyers and sellers from knowing each others' identities until after a deal is consummated.

### SUMMARY OF THE INVENTION

The present invention addresses the foregoing problems by providing a system and method for electronic commerce using standardized product descriptors. In one aspect of the invention, a method for electronic commerce begins by storing for each of a plurality of buyers a buyer profile comprising criteria for selecting qualified sellers. Likewise, there is stored for each of a plurality of sellers a seller profile comprising criteria for selecting requests for quotations on which to quote. Thereafter, a request for quotation for a product is received from a buyer. The buyer profile of the buyer is then applied to select a first set of qualified sellers, after which the seller profiles of the first set of qualified sellers are applied to select a second set of qualified sellers to receive requests for quotation. Finally, a request for quotation is anonymously transmitted via the network to each of the second set of qualified sellers.

In another aspect of the invention, the method for electronic commerce continues by storing for each buyer a set of purchasing criteria for determining whether to receive a seller's quote. A plurality of anonymous quotes are then received from the second set of qualified sellers. Thereafter, at least one quote that satisfies the purchasing criteria is transmitted to the buyer. In response to the buyer indicating acceptance of the quote, a purchase order is then transmitted to the seller and the buyer and seller are notified as to each others' identities.

In yet another aspect of the invention, the method for electronic commerce includes providing the buyer with a list of products, each product being represented by a standardized product descriptor. In one aspect, each standardized product descriptor includes an industry category field, a manufacturer field, a product number field, and a hyperlink to a description of an associated product on a manufacturer's web site. Thereafter, the buyer selects at least one product from the list for including in a request for quotation.

In still another aspect of the invention, the various criteria for selecting qualified sellers, for selecting requests for quotation, and for receiving a quote from a seller include one or more indications of relative importance for prioritizing the criteria. In one aspect, the indications of relative importance are expressed as weights.

According to yet another aspect of the present invention, a system for electronic commerce using a computer network includes a computer-readable medium comprising a plurality of buyer profiles and a plurality of sellers profiles. The buyer profiles include criteria for selecting qualified sellers, and the seller profiles include criteria for selecting requests for quotations on which to quote. The system also includes a first filter, coupled to the computer-readable medium, for applying the buyer profile of the buyer to select a first set of qualified sellers. Additionally, the system includes a second filter, coupled to the first filter and the computer-readable medium, for applying the seller profiles of the first set of qualified sellers to select a second set of qualified sellers to receive a request for quotation. The system also includes a communications module, coupled to the second filter, for receiving a request for quotation and for anonymously transmitting the request for quotation via the network to each of the second set of qualified sellers.

In another aspect of the invention, the computer-readable medium includes purchasing criteria of a buyer for selecting quotes to receive from a plurality of sellers, and the system includes a third filter for selecting at least one quote that satisfies the buyer's purchasing criteria.

### BRIEF DESCRIPTION OF THE DRAWINGS

These and other more detailed and specific objects and features of the present invention are more fully disclosed in the following specification, reference being had to the accompanying drawings, in which
Figure 1 is a high-level diagram of a system for electronic commerce according to an embodiment of the invention;
Figure 2 is a block diagram of a transaction server according to an embodiment of the invention;
Figure 3 is a dataflow diagram of an electronic transaction according to an embodiment of the invention;
Figure 4 is an illustration of a product index comprising standardized product descriptors according to an embodiment of the invention;
Figure 5 is a flowchart of a method for electronic commerce according to an embodiment of the invention;
Figure 6 is an illustration of a buyer profile according to an embodiment of the invention;
Figure 7 is an illustration of a seller profile according to an embodiment of the invention;
Figure 8 is an illustration of a request for quotation according to an embodiment of the invention;
Figure 9 is an illustration of a filtration process according to an embodiment of the invention; and
Figure 10 is an illustration of a quote according to an embodiment of the invention.

### DETAILED DESCRIPTION OF THE PREFERRED EMBODIMENTS

A preferred embodiment of the invention is now described with reference to the Figures, where like reference numbers indicate identical or functionally similar elements. Also in the Figures, the left most digit or digits of each reference number correspond to the Figure in which the reference number is first used.

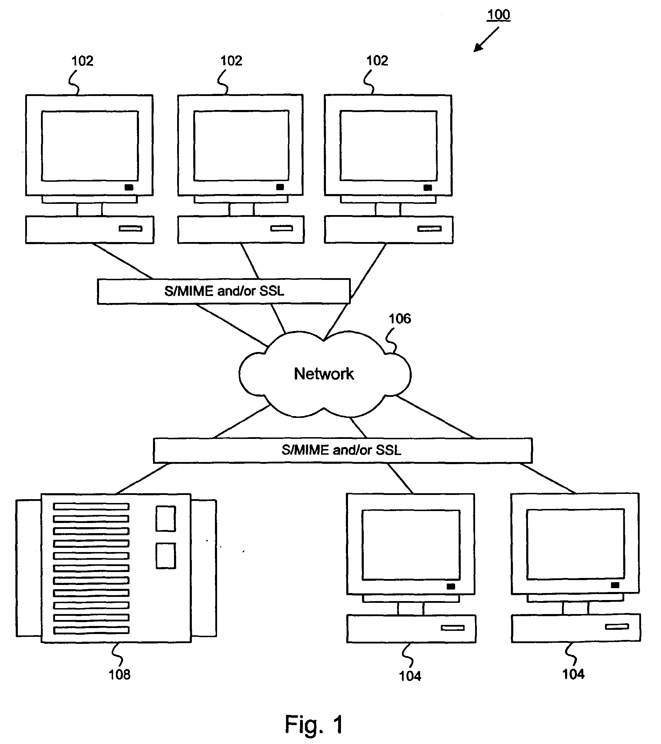

Referring now to Figure 1, there is shown a system 100 for electronic commerce according to one embodiment of the invention. The system 100 includes a plurality of buyer's terminals 102 and a plurality of seller's terminals 104, each of which are connected to a transaction server 108 via a network 106, such as the Internet. The terminals 102, 106 interact with the server 108 using a secure protocol, such as Secure Multipurpose Internet Mail Extension (S/MIME) and Secure Sockets Layer (SSL), to perform electronic commercial transactions according to methods of the present invention.

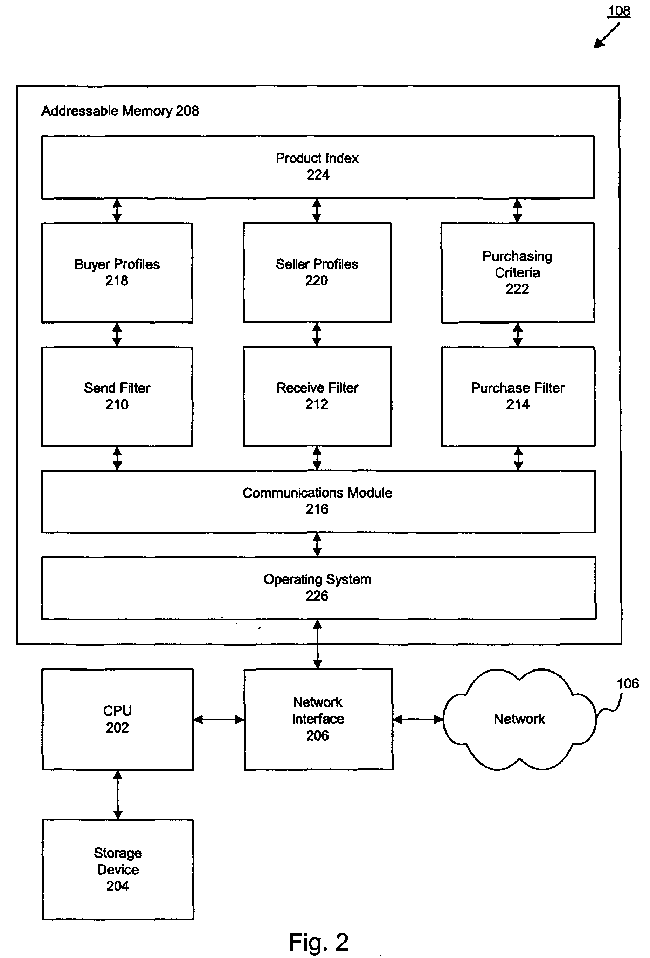

Figure 2 is a block diagram showing additional details of the transaction server 108. In one embodiment, the transaction server 108 is implemented using a conventional computer workstation, such as IBM PC® or compatible, although other implementations such as embedded systems are possible. A central processing unit (CPU) 202 executes software instructions and interacts with other system components to perform the methods of the present invention. A storage device 204, coupled to the CPU 202, provides long-term storage of data and software programs, and may be implemented as a hard disk drive or other suitable mass storage device. A network interface 206, coupled to the CPU 202, connects the transaction server 108 to a network 106, such as the Internet.

An addressable memory 208, coupled to the CPU 202, stores data structures and software instructions to be executed by the CPU 202, and is implemented using a combination of standard memory devices, such random access memory (RAM) and read-only memory (ROM). In one embodiment, the memory 208 stores a number of software objects or modules, including an a send filter 210, a receive filter 212, and a purchase filter 214, each of which are coupled to a communication module 216. Throughout this discussion, the foregoing modules are described as separate functional units, but those skilled in the art will recognize that the various units may be combined and integrated into a single software application or device.

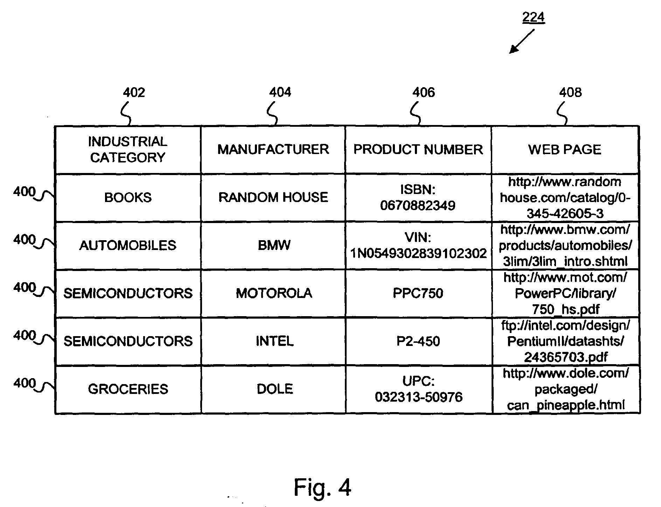

In one embodiment, the memory 208 also stores a number of data structures, accessible to the software objects described above, including a plurality of buyer profiles 218, seller profiles 220, and purchasing criteria 222. In addition, the memory 208 stores a product index 226, which is described in greater detail with respect to Figure 4.

In one embodiment, the filters 210, 212, 214 are implemented using a conventional relational database, such as Oracle 8®, available from Oracle Corporation of Redwood Shores, California, although other implementations using, for example, multi-dimensional databases, are possible. Additionally, in one embodiment, the communication module 216 is implemented using a standard web server, such as Windows NT Server 4.0®, available from Microsoft Corporation of Redmond, Washington, in combination with an e-mail server, such as Microsoft Exchange Server 5.5®. For security purposes, encryption technology may be used, including S/MIME for e-mail and SSL for web-based transactions.

In one embodiment, the memory 208 also includes an operating system 226 coupled to the communications module 216, for managing and providing memory and other system resources to the above-mentioned software objects or modules. Preferably, Microsoft NT® is used, although a variety of other operating systems 228, such as Solaris®, MacOS 8®, or UNIX®, may be used within the scope of the present invention.

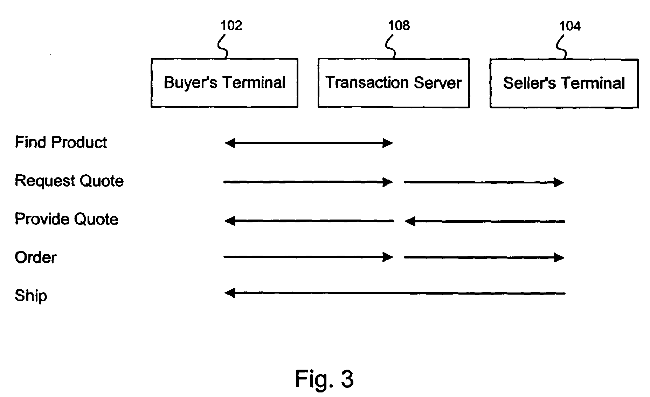

Referring also to Figure 3, there is shown a high-level illustration an electronic transaction according to one embodiment of the present invention. Initially, a buyer uses terminal 102 to find and select a product from a product index 224 stored in the transaction server 108. As explained below, the product index 224 is a list of products in a standardized product descriptor format, which allows a buyer to quickly identify a desired product in a large list. In one embodiment, a conventional web browser, such as Microsoft Internet Explorer® or Netscape Communicator®, is used to display the product index 224 and obtain the buyer's selection. In alternative embodiments, however, the selection may be made off-line using a printed catalog or the like and sending an e-mail message to the server 108.

As noted earlier, one of the problems with conventional systems for electronic commerce is the lack of a standardized identifier by which each product is known to every buyer and seller. Typically, each buyer and seller uses a different product number or code for the same product. Among other problems, the lack of a standardized identifier creates synchronization difficulties in EDI transactions, as well as difficulties for a buyer in locating a desired product.

As illustrated in Figure 4, the present invention solves the foregoing problems by organizing the products in the product index 224 as standardized product descriptors 400. In one embodiment, each descriptor 400 includes three fields: an industrial category field 402, a manufacturer field 404, and a product number field 406. Preferably, the industrial category 402 and manufacturer 404 fields are automatically or manually assigned by the system 100, whereas the product number field 406 may be assigned by the product manufacturer.

This novel format of the descriptors 400 offers a number of advantages not found in conventional electronic commerce systems. First, it allows a buyer to quickly find a desired product within a relatively large list by sequentially selecting an industrial category, a manufacturer, and then a product number. Second, it allows a manufacturer to easily upload its product catalog to the server 108, at which time the server 108 may automatically or manually categorize the products according to the industrial category 402 and manufacturer 404.

In one embodiment, each descriptor 400 may additionally include a web page field 408 including a Uniform Resource Locator (URL) , which functions as a hyperlink to the manufacturer's web site. This feature allows a buyer to easily verify a product's specifications before submitting an request for quotation (RFQ). For example, as illustrated in Figure 4, a descriptor 400 for a particular semiconductor chip may include a hyperlink to the chip's datasheet on the manufacturer's web site.

Referring again to Figure 3, after selecting a product, the buyer transmits an RFQ to the transaction server 108. This may be done, for example, by filling out an web-based electronic form or by sending an e-mail message to the server 108. In either case, SSL or S/MIME, respectively, are used to provide a high level of security throughout the transaction.

Next, as described in greater detail below, the transaction server 108 selects the appropriate sellers to receive the RFQ and transmits an RFQ to the terminal 104 of each of the selected sellers using a secure form of e-mail. Preferably, the RFQ does not identify the buyer, but is, instead, only identified by a transaction number assigned by the server 108.

Thereafter, one or more sellers who received the RFQ use their terminals 104 to transmit a quote to the transaction server 108. As described more fully below, the quote that best meets the buyer's purchasing criteria is transmitted via secure e-mail to the buyer's terminal 102. Like the RFQ, the quote does not identify the seller, but is only identified by the transaction number associated with the RFQ.

The buyer must then decide whether to accept or reject the quote. If the buyer accepts, a purchase order for the product is transmitted from the server 108 to the seller's terminal 104. In one embodiment, both parties are then notified as to each others' identities, since delivery and payment are preferably handled outside of the context of the system 100. Thereafter, the seller ships the product directly to the buyer, the buyer pays the seller, and the transaction is concluded. In one embodiment, the system assesses a transaction fee from each party for facilitating the electronic transaction.

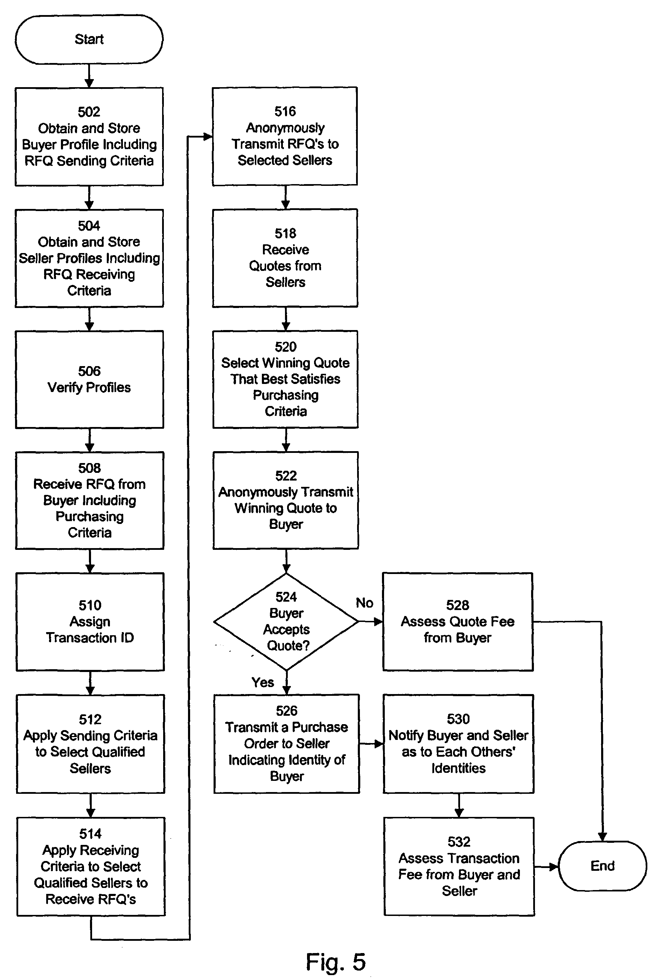

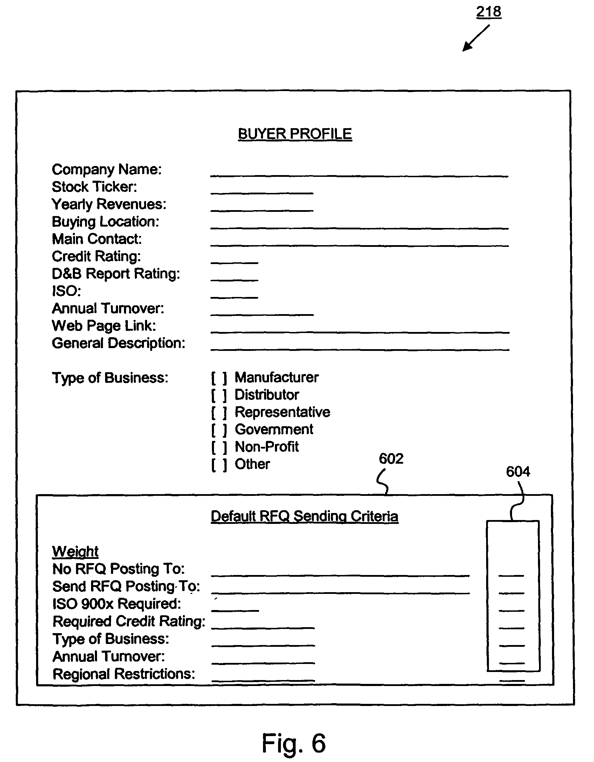

Referring now to Figure 5, there is shown a flowchart of a method for performing electronic commerce according to one embodiment of the invention. The method begins with registering the buyer into the system 100 by obtaining 502 and storing at least one buyer profile 218. To accomplish this, each buyer completes an electronic form, such as the form shown in Figure 6, which is preferably either web or e-mail based. In one embodiment, the buyer profile 218 includes the buyer's
- company name,
- stock ticker,
- yearly revenues,
- buying location,
- main contact,
- credit rating,
- D&B report rating,
- ISO qualification,
- annual turnover,
- webpage, and
- type of business.
It should be recognized, however, that different or additional information about the buyer could be stored in the buyer profile 218 depending on the needs of particular businesses. As described in greater detail hereafter, the buyer profile 218 is used in determining whether a seller should receive an RFQ from a particular buyer.

As shown in Figure 6, the buyer profile 218 also includes a set of default RFQ sending criteria 602. The sending criteria 602 are used in one embodiment to determine a set of qualified sellers to whom an RFQ may be sent, and includes one or more the following:
- a list of sellers to whom an RFQ should not be sent;
- a list of sellers to whom an RFQ should be sent;
- an ISO 900x qualification requirement;
- a required credit rating;
- a type of business restriction;
- an annual turnover restriction; and
- one or more regional restrictions.
Those skilled in the art will recognize that different or additional criteria may be included in the sending criteria 602 in response to the needs of particular businesses. As described in greater detail below, the default sending criteria 602 are used when a set of transaction-specific sending criteria are not specified.

The "list of sellers to whom an RFQ should not be sent" in the sending criteria 602 is advantageous because it allows a buyer to selectively exclude sellers with whom the buyer has had negative experiences in the past. Likewise, the "ISO qualification" and "credit rating" criteria are useful because they provide the buyer with a degree of confidence that the seller is a legitimate entity.

The "type of business" and "annual turnover" criteria assist the buyer in filtering out sellers who are probably not capable of meeting the buyer's needs. For example, if a seller is a distributor with an annual turnover (e.g. sales) of 10,000 units, and the buyer requires 100,000 units (which in some cases is available only from a manufacturer) there is little need to send an RFQ to, and receive quotes from, that distributor. In such a case, the "type of business" criteria would be set to "manufacturers only" and the "annual turnover" criteria would be set to "at least 100,000 units".

In one embodiment, the sending criteria 602 also includes one or more regional restrictions. In other words, the buyer may specifically limit quotes to sellers who are located in a particular country, state, or region, or even have offices within a pre-determined distance from the buyer. Likewise, the buyer may selectively exclude sellers in particular countries, regions, or the like, from providing quotes. In addition, the regional restrictions may take into account any required import/export licenses or the like.

Such qualifications are important in the context of global commerce, where export laws play an important role in transactions. Moreover, shipping costs and transit times are crucial in many instances. For example, where products are urgently required by U.S. buyer at a low shipping cost, there is little need to send an RFQ to a Japanese manufacturer who must send the products at great expense by ship.

In one embodiment, each criterion in the sending criteria 602 may additionally include a weight 604, or other indication of relative importance, for assigning priorities to the criteria 602. For example, each weight 604 may be a number between 1 and 100, and a required "combined" weight is selected for determining whether the overall sending criteria 602 are satisfied.

In one embodiment, each individual criterion that is satisfied receives the weight specified, while criteria that are not satisfied receive a weight of zero. By allocating weights 604 to the criteria 602, a seller may satisfy the overall sending criteria 602, despite the failure any specific criterion. In one embodiment, a criterion may be made an absolute requirement, independent of the criteria with weights 604, by indicating "N/A" or "REQUIRED" in weight 604 column.

An example of the foregoing is shown in Table 1, where the "Price" element is required, while each of the remaining elements are assigned a weight of 50.

**Table 1**

| Element | Satisfied? | Weight |
|---|---|---|
| Price | Y | N/A |
| ISO 900x qualification | Y | 50 |
| Required credit rating | Y | 50 |
| Annual turnover | N | 50 |

The total combined weight of the satisfied elements is 100. If the required combined weight is 100, the sending criteria 602 are satisfied, despite the failure of one of the criteria. Those skilled in the art will recognize that different or additional mechanisms may be provided for assigning greater importance to one or more of the criteria 602 without departing from the spirit of the invention.

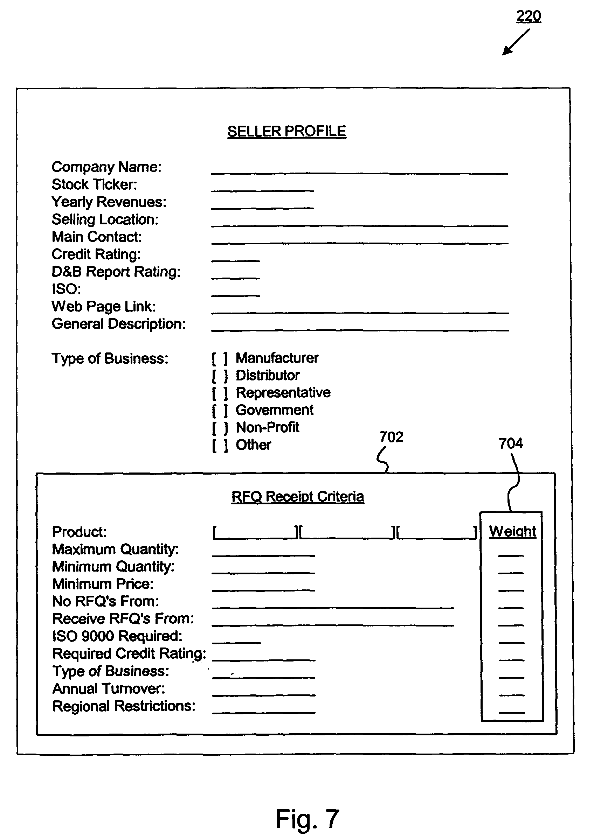

Referring again to Figure 5, after the buyer profile 218 is obtained in step 502, the method continues with registering the sellers by obtaining 504 and storing at least one seller profile 220. Each seller may complete an electronic form, either web-based or by e-mail, such as the form illustrated in Figure 7. In one embodiment, the seller profile 220 includes the seller's
- company name,
- stock ticker,
- yearly revenues,
- selling location,
- main contact
- credit rating,
- D&B report rating,
- ISO qualification,
- annual turnover,
- webpage, and
- type of business.
It should be recognized, however, that different or additional information about the seller could be stored in the seller profile 220 without departing from the spirit of the invention. As described in greater detail hereafter, the seller profile 220 is used to determine whether the seller is qualified to receive an RFQ from a buyer according to the buyer's sending criteria 602.

As shown in Figure 7, the seller profile 220 also includes a set of RFQ receiving criteria 702. The receiving criteria 702 are used in one embodiment to determine whether an RFQ may be received from a particular buyer, and includes one or more of the following:
- one or more products (in standardized product descriptor form) for which RFQ's are desired;
- a maximum product quantity;
- a minimum product quantity;
- a minimum selling price;
- a list of buyers from whom an RFQ should not be received;
- a list of buyers from whom an RFQ should be received;
- a ISO 900x qualification requirement;
- a required credit rating;
- a type of business restriction;
- an annual turnover restriction; and
- one or more regional restrictions.
Those skilled in the art will recognize that different or additional elements may be included in the receiving criteria 702 based on the needs of particular businesses. Like the sending criteria 602, the receiving criteria 702 may include weights 704 or other indications of relative importance for prioritizing the criteria 702.

Referring again to Figure 5, after the seller profile 220 is obtained in step 504, the method continues by verifying 506 the buyer and seller profiles 218, 220. In one embodiment, this process is performed manually by checking line of the profiles 218, 220 against trusted or verifiable sources. More advantageously, however, the information is checked electronically where such resources are available. Electronic verification of business addresses, credit ratings, and the like are well known to those skilled in the art.

Verification serves an important purpose since each party is not aware of the other's identity before a sale is consummated. Buyers and sellers must be confident that the profiles 218, 220 are accurate in order for the criteria 602, 702 to be accurately applied. Unlike conventional systems, such verification need not be performed before every transaction, but is typically done at the time of registration, with periodic updates as required. Conventionally, a verification process was commenced for each transaction between two previously unacquainted parties, even though the parties may have recently undergone such a process in the contexts of different transactions. Such duplication was wasteful and increased transaction costs.

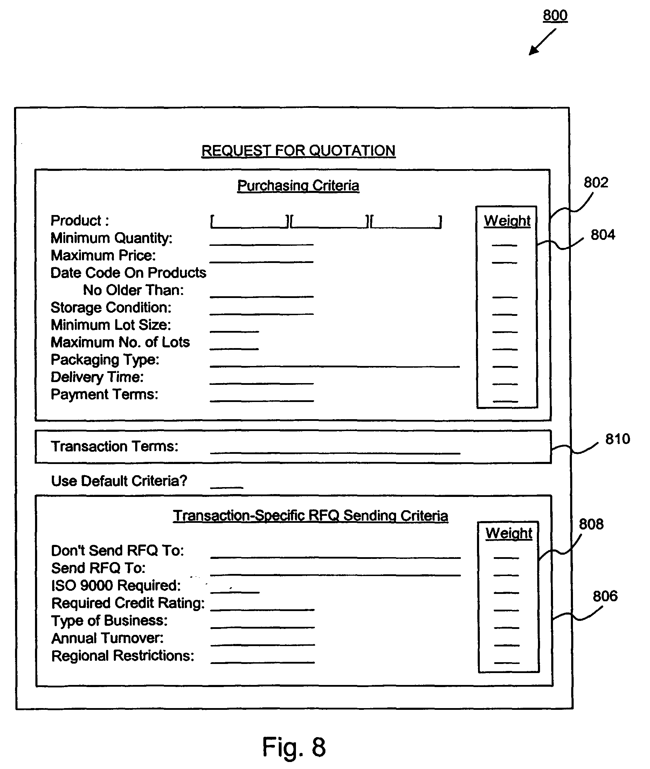

Referring also to Figure 8, after the profiles 218, 220 are verified in step 506, the method continues by receiving 508 a request for quotation (RFQ) 800 from a buyer. In one embodiment, the RFQ 800 is received from the buyer's terminal 102 when the buyer completes a e-mail or web-based electronic form. The RFQ 800 preferably includes a set of purchasing criteria 802 for selecting quotes to receive from sellers. In one embodiment, the purchasing criteria 802 includes one or more of the following:
- one or more products (in standardized product descriptor form) for which quotes are desired;
- a minimum product quantity;
- a maximum product price;
- a product date code restriction (i.e. maximum or minimum age of products);
- a product storage condition requirement (i.e. refrigerated);
- a minimum lot size;
- a maximum number of lots;
- a packaging type restriction (e.g. single, six pack)
- a delivery time restriction; and
- a payment terms restriction.
Those skilled in the art will recognize that different or additional elements may be included in the purchasing criteria 702 in response to the needs of particular businesses. Like the sending 602 and receiving 702 criterira, the purchasing criteria 802 may include weights 704 or other indications of relative importance for prioritizing the criteria 802.

In one embodiment, each RFQ 800 additionally includes a set of transaction-specific RFQ sending criteria 806. Rather than using the default criteria 602 illustrated in Figure 6, the buyer may specify a set of criteria 806 for a particular transaction, which will supersede the default criteria 602. This can be advantageous in situations where a buyer has a urgent need for a product and is willing to waive one or more of the default restrictions in order to obtain it as quickly as possible. In one embodiment, the RFQ 800 includes a selection field for selecting between the default 602 and transaction-specific 806 criteria. Like the default criteria 602, the transaction-specific criteria 806 may include weights 808 or other indications of relative importance among the criteria 806.

In one embodiment, the RFQ 800 also includes one or more transaction terms 810 governing the process of receiving quotes from the sellers. For example, the buyer may wish to accept quotes from qualified sellers until a specified time, after which no more quotes will be accepted. Alternatively, the buyer may wish to accept quotes until a pre-selected number of quotes that meet the purchasing criteria 802 are received.

Referring again to Figure 5, after the RFQ 800 is received from the buyer in step 508, the method continues by assigning 510 a transaction identifier to the RFQ 800. In one embodiment, the transaction identifier is a long sequence of digits that uniquely identifies an REQ 800 and any subsequent quotes pertaining to the RFQ 800 throughout the transaction. The purpose of the transaction identifier is to preserve the anonymity of the parties until after the transaction is consummated.

In one embodiment, the system 100 automatically associates the identity of the buyer, derived, for example, from the buyer's e-mail address accompanying the RFQ 800, with the transaction identifier. However, until the transaction is consummated, the association between the transaction identifier and the buyer is held in strict confidence by the system 100.

After the transaction identifier is assigned in step 510, the method continues by applying 512 the default 602 or transaction-specific 806 sending criteria of the buyer to select a set of qualified sellers. In one embodiment, this is accomplished by means of the send filter 210 shown in Figure 2, which selects those sellers whose seller profiles 210 satisfy the appropriate sending criteria 602 or 806. In one embodiment, the send filter 210 is implemented using a conventional relational database.

Thereafter, the method continues by applying 514 the receiving criteria 702 of the sellers to determine which of the qualified sellers will receive an RFQ 800 from the buyer. In one embodiment, this is accomplished by means of the receive filter 212 shown in Figure 2, which selects those sellers whose receiving criteria 702 are satisfied by the buyer profile 210 of the buyer. Like the send filter 210, the receive filter 212 is implemented, in one embodiment, using a standard relational database.

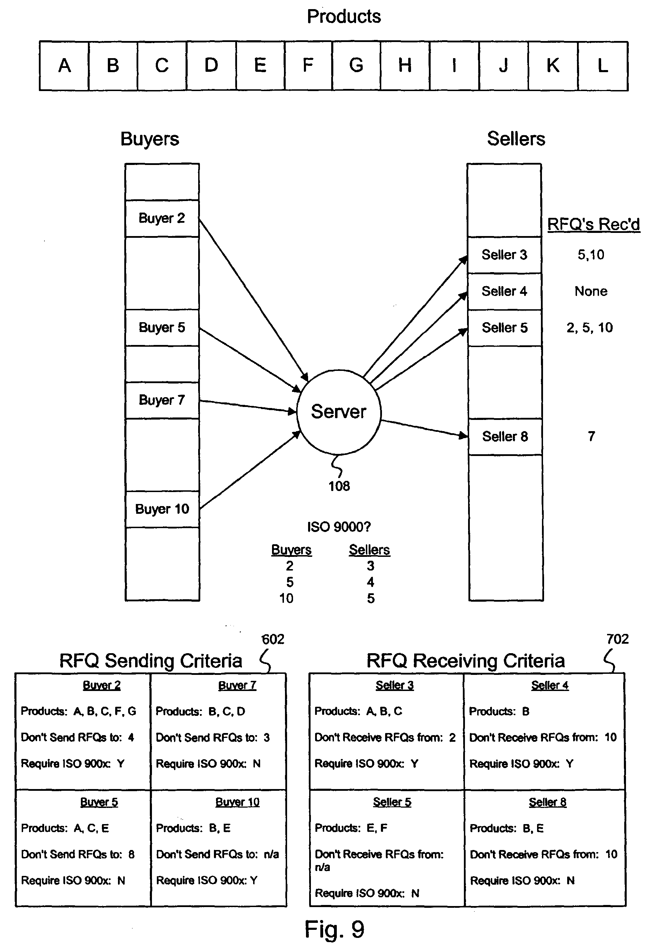

An example of the filtering process is illustrated in Figure 9. Therein, buyers 2,7,5, and 10 have specified a set of sending criteria 602, including a list of products for which quotes are desired, a list of sellers to whom an RFQ 800 should not be sent, and an ISO 900x qualification requirement Similarly, sellers 3, 4, 5, and 8 have specified a set of receiving criteria 702, including a list of products for which RFQ's 800 are desired, a list of sellers to whom an REQ 800 should not be sent, and an ISO 900x qualification requirement.

Serially applying the sending 602 and receiving 702 Criteria of the buyer and sellers, respectively, results in the following RFQ's 800 being received:
- seller 3 receives an RFQ 800 from buyers 5 and 10;
- seller 4 does not receive an RFQ 800;
- seller 5 receives an RFQ 800 from buyers 2,5, and 10; and
- seller 8 receives an RFQ 800 from buyer 7.

Referring again to Figure 5, after the sending 602 and receiving 702 criteria are applied in steps 512 and 514, respectively, to select a set of qualified sellers for receiving RFQ's 800, the method continues by anonymously transmitting 516 an RFQ 800 to each of the selected sellers. In one embodiment, the RFQ's 800 are transmitted to the sellers using a secure form of e-mail, and include only:
- the transaction identifier;
- the product(s) for which quotes are desired (in standardized product descriptor form);
- the transaction terms 810; and
- one or more of the purchasing criteria 802 as specified by the buyer.

As noted earlier, the transaction identifier is the only form of identification that is provided in the RFQ 800. To forestall the problems discussed in the Background, a seller should not know the identity of the buyer before a quote is accepted and the transaction is consummated. Nevertheless, the seller will know that the buyer is not on the seller's list of buyers, if any, from whom an RFQ 800 should not be received.

In one embodiment, the buyer may additionally specify that one or more of the purchasing criteria 802 should be noted in the RFQ 800, such as quantity, minimum price, and the like. However, this is not a requirement, since the seller has already been found to meet the buyer's sending criteria 602 in order to have received the RFQ 800.

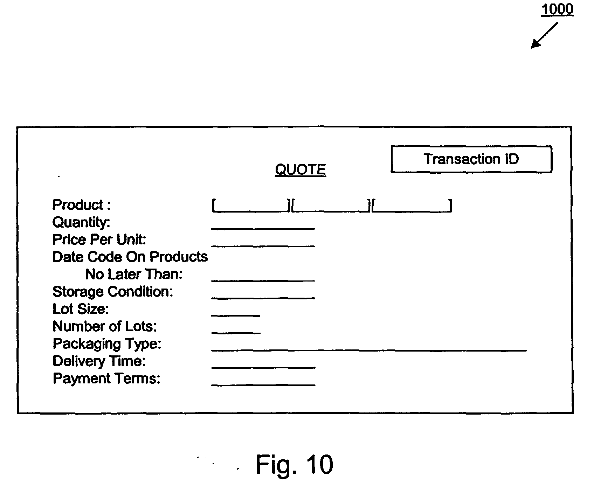

Referring also to Figure 10, after the RFQ's 800 are transmitted in step 516, the method continues by receiving 518 a plurality of quotes 1000 from the sellers. In one embodiment, the quotes 1000 are manually entered by a seller on the seller's terminal 104. Like the RFQ's 800, the quotes 1000 may be sent via secure e-mail to the transaction server 108, or supplied using an web-based electronic form. In alternative embodiments, however, the quotes are automatically generated by the seller's terminal 104 in response to a set of pre-defined criteria supplied by the seller. As shown in Figure 10, the quotes 1000, in one embodiment, include:
- the transaction number;
- a product (in standardized product descriptor form);
- a quantity;
- a price per unit;
- an indication of the date code on the products;
- an indication of the storage condition of the products;
- a lot size;
- a number of lots;
- a packaging type;
- a delivery time; and
- a set of payment terms
Those skilled in the art will recognize that different or additional information may be included in the quote 1000 depending on the needs of particular businesses. In one embodiment, the system 100 accumulates quotes 1000 until a time specified in the transaction terms 810. Alternatively, the system 100 accumulates quotes 1000 until a pre-determined number of quotes 1000 satisfying the buyer's purchasing criteria 802 have been received.

Additionally, the system 100 automatically associates the identity of the seller, derived, for example, from the seller's e-mail address accompanying the quote 1000, with the transaction number. This association is kept in confidence by the system 100 until such time as the transaction is consummated.

After the quotes 1000 are received in step 518, the method continues by selecting 520 a winning quote 1000 that best matches the purchasing criteria 802. In one embodiment, all of the purchasing criteria 802 are absolute requirements (as indicated by "N/A or "REQ" in the weight column 804), in which case the quote 1000 with the lowest "price per unit" is selected as the winning quote 1000. However, in alternative embodiments, where various weights 804 are specified, the quote 1000 with the largest total combined weight 804 is selected.
For example, as shown in Table 2, quotes 1000 are received from two sellers.

**Table 2**

| Criterion | Seller 1 | Seller 2 | Weight |
|---|---|---|---|
| Price per unit | Y | Y | N/A |
| ISO 900x qualification. | Y | N | 30 |
| Required credit rating | Y | Y | 40 |
| Annual turnover | N | Y | 50 |
| Total combined weight: | 70 | 90 | |

Both seller 1 and seller 2 satisfy the "Price per unit" criterion, which is, in any case, required. However, seller 1 satisfies the "ISO 900x qualification" and "credit rating" requirements, for a total combined weight of 70, whereas seller 2 satisfies the "credit rating" and "annual turnover" requirements, for a total combined weight of 90. In this example, the quote 1000 of seller 2 would be selected as the winning quote 1000 because it has the highest total combined weight. In alternative embodiments, however, more than one winning quote 1000 may be selected.

After the winning quote 1000 is selected in step 520, the method continues by anonymously transmitting 522 the winning quote 1000 to the buyer. The quote does not indicate the identity of the seller, only the transaction number assigned to the RFQ 800.

Thereafter, a determination 524 is made whether the buyer accepts the quote. In one embodiment, the determination is made by receiving an atfirmative or negative e-mail response from the buyer. Alternatively, the buyer may indicate acceptance or rejection of the quote 1000 using a web-based electronic form.

If the buyer accepts, the method continues by transmitting 526 a purchase order to the seller corresponding to the quote 1000. In one embodiment the purchase order is identical to the quote 1000 except that it further indicates the identity of the buyer, the buyer's location, and other information relevant to shipping the product and receiving payment.

Thereafter, the method continues by notifying 530 the buyer and seller as to each others' identities. In one embodiment, the seller already knows the identity of the buyer by reason of the purchase order. Consequently, an e-mail notification is sent to the buyer identifying the seller. Finally, the method continues by assessing 532 a transaction fee from both the buyer and seller for the service of facilitating the transaction.

If, however, the buyer does not accept the quote in step 524, the method concludes by assessing 528 a quote fee from the buyer. In one embodiment, the quote fee is relatively larger than the transaction fee in order to discourage routine use of the system 100 merely to obtain price quotations. This feature gives sellers more confidence that a quote 1000 will result in a transaction. Nevertheless, it leaves open the possibility that a sufficiently motivated buyer can determine the market price for a product without having to complete a purchase, which can be valuable when a buyer is negotiating a face-to-face contract outside of the context of the invention. Likewise, a seller of a product could use the system 100 for the same purpose, posing as a buyer to determine the market price for its product.

The above description is included to illustrate the operation of the preferred embodiments and is not meant to limit the scope of the invention. The scope of the invention is to be limited only by the following claims. From the above discussion, many variations will be apparent to one skilled in the art that would yet be encompassed by the spirit and scope of the present invention.

## Claims

1. A method for electronic commerce using a computer network, the method comprising:
storing for each of a plurality of buyers a buyer profile comprising criteria for selecting qualified sellers;
storing for each of a plurality of sellers a seller profile comprising criteria for selecting requests for quotations on which to quote;
receiving from a buyer a request for quotation for a product;
applying the buyer profile of the buyer to select a first set of qualified sellers;
applying the seller profiles of the first set of qualified sellers to select a second set of qualified sellers to receive requests for quotation; and
anonymously transmitting a request for quotation via the network to each of the second set of qualified sellers.

2. The method of claim 1, further comprising:
storing for each buyer a set of purchasing criteria for selecting quotes to receive from sellers;
receiving a plurality of anonymous quotes from the second set of qualified sellers;
anonymously transmitting at least one quote that satisfies the purchasing criteria to the buyer; and
responsive to the buyer indicating acceptance of the quote:
transmitting a purchase order to the seller; and notifying the buyer and seller of each others' identities.

3. The method of claim 2, wherein the purchasing criteria is selected from the group consisting of a maximum price, a minimum quantity, a product age restriction, a product storage condition restriction, a minimum lot size, a maximum number of lots, a delivery time, a payment term, and a seller's location.

4. The method of claim 2 or 3, wherein storing a set of purchasing criteria comprises:
storing an indication of relative importance for at least one criterion among the purchasing criteria.

5. The method of claim 2, 3 or 4, wherein transmitting at least one quote that satisfies the purchasing criteria comprises:
anonymously transmitting to the buyer the quote that best satisfies the purchasing criteria.

6. The method of one of the preceding claims, wherein storing a buyer profile comprises: storing an indication of relative importance for at least one criterion among the criteria for selecting qualified sellers.

7. The method of one of the preceding claims, wherein storing a seller profile comprises:
storing an indication of relative importance for at least one criterion among the criteria for selecting requests for quotations on which to quote.

8. The method of one of the preceding claims, wherein receiving a request for quotation comprises:
providing a buyer with a list of products, each product represented by a standardized product descriptor; and
receiving from the buyer a selection of at least one product from the list for including in a request for quotation.

9. The method of claim 8, wherein each standardized product descriptor comprises an industry category field, a manufacturer field, and a product number field.

10. The method of claim 8 or 9, wherein at least one standardized product descriptor comprises a hvperlink to a description of an associated product on a manufacturer's web site.

11. The method of one of the preceding claims, wherein applying the buyer profile comprises:
selecting ones of the plurality of sellers whose seller profiles satisfy the buyer's criteria for selecting qualified sellers.

12. The method of one of the preceding claims, wherein applying the seller profiles comprises:
selecting ones of the first set of qualified sellers whose criteria for selecting requests for quotation on which to bid are satisfied by the buyer's profile.

13. The method of one of the preceding claims, wherein anonymously transmitting a request for quotation comprises:
assigning a transaction number to the request for quotation;
associating the transaction number with the identity of the buyer; and
sending a request for quotation to each of the second set of qualified sellers, wherein the request for quotation is only identified by the transaction number.

14. The method of one of the preceding claims, further comprising:
receiving a plurality of anonymous quotes from the second set of qualified sellers, each quote identified only by the transaction number;
selecting a seller's quote for transmitting to the buyer;
associating the identity of the seller with the transaction number;
anonymously transmitting the quote to the buyer; and
responsive to the buyer indicating acceptance of a quote:
identifying the buyer and seller using the transaction number; and
notifying the buyer and seller of each others' identities.

15. The method of one of the preceding claims, wherein storing a buyer profile comprises:
storing a list of sellers to whom a request for quotation will not be sent.

16. The method of one of the preceding claims, wherein storing a seller profile comprises:
storing a list of buyers from whom a request for quotation will not be received.

17. The method of one of the preceding claims, wherein storing a seller profile comprises:
storing a list of products for which requests for quotation are desired.

18. The method of one of the preceding claims, wherein the buyer's criteria for selecting qualified sellers are selected from the group consisting of a seller's credit rating, a seller's ISO 900x qualification, a seller's annual turnover, a seller's location, and a seller's type of business.

19. The method of one of the preceding claims, wherein the seller's criteria for selecting requests for quotation on which to quote are selected from the group consisting of a maximum product quantity, a minimum product quantity, a buyer's credit rating, a buyer's ISO 900x qualification, a buyer's annual turnover, a buyer's location, and a buyer's type of business.

20. A system for electronic commerce using a computer network, the system comprising:
a computer-readable medium comprising:
a plurality of buyer profiles comprising criteria for selecting qualified sellers; and
a plurality of seller profiles comprising criteria for selecting requests for quotations on which to quote;
a first filter, coupled to the computer-readable medium, for applying the buyer profile of the buyer to select a first set of qualified sellers;
a second filter, coupled to the first filter and the computer-readable medium, for applying the seller profiles of the first set of qualified sellers to select a second set of qualified sellers to receive a request for quotation; and
a communications module, coupled to the second filter, for receiving a request for quotation and for anonymously transmitting the request for quotation via the network to each of the second set of qualified sellers.

21. The system of claim 20, wherein the computer-readable medium comprises a plurality of a standardized product descriptors representing products, and wherein the communication module provides a buyer with a list of standardized product descriptors and receives from the buyer a selection of at least one descriptor for including in a request for quotation.

22. The system of claim 21, wherein each standardized product descriptor comprises an industry category field, a manufacturer field, and a product number field.

23. The system of claim 21 or 22, wherein at least one standardized product descriptor comprises a hyperlink to a description of an associated product on a manufacturer's web site.

24. The system of one of claims 20 to 23, wherein the computer-readable medium comprises a set of purchasing criteria of a buyer for selecting quotes to receive from sellers, the system comprising:
a third filter for selecting at least one quote that satisfies the buyer's purchasing criteria.

25. The system of claim 24, wherein at least one criterion of the purchasing criteria includes an indication of relative importance with respect to another criterion.

26. The system of one of claims 20 to 25, wherein the computer-readable medium comprises a set of purchasing criteria of a buyer for selecting quotes to receive from sellers, the system comprising:
a third filter for selecting the quote that best satisfies the buyer's purchasing criteria.

27. The system of one of claims 20 to 26, wherein at least one criterion of the criteria for selecting qualified sellers includes an indication of relative importance with respect to another criterion.

28. The system of one of claims 20 to 27, wherein at least one criterion of the criteria for selecting requests for quotation on which to bid includes an indication of relative importance with respect to another criterion.

29. The system of one of claims 20 to 27, wherein the communication module is configured to anonymously transmit a seller's quote to the buyer, and, responsive to the buyer indicating acceptance of the quote, transmit a purchase order to the seller and notify the buyer and seller of each others' identities.

30. A computer-readable medium having computer-readable code embodied therein for providing electronic commerce using a computer network, the computer-readable medium comprising:
computer-readable code configured to store for each of a plurality of buyers a buyer profile comprising criteria for selecting qualified sellers;
computer-readable code configured to store for each of a plurality of sellers a seller profile comprising criteria for selecting requests for quotations on which to quote;
computer-readable code configured to receive from a buyer a request for quotation for a product;
computer-readable code configured to apply the buyer profile of the buyer to select a first set of qualified sellers;
computer-readable code configured to apply the seller profiles of the first set of qualified sellers to select a second set of qualified sellers to receive requests for quotation; and
computer-readable code configured to anonymously transmit a request for quotation via the network to each of the second set of qualified sellers.

31. The computer-readable medium of claim 30, further comprising:
computer-readable code configured to store for each buyer a set of purchasing criteria for selecting quotes to receive from sellers;
computer-readable code configured to receive a plurality of anonymous quotes from the second set of qualified sellers;
computer-readable code configured to anonymously transmit at least one quote that satisfies the purchasing criteria to the buyer; and
computer-readable code configured, responsive to the buyer indicating acceptance of the quote, to:
transmit a purchase order to the seller; and
notify the buyer and seller of each others' identities.
